# EUROPEAN PATENT SPECIFICATION

(11) **EP 2 682 309 B1**
(45) Date of publication and mention of the grant of the patent: **18.11.2015**
(21) Application number: 12174657.2
(22) Date of filing: 02.07.2012
(51) Int. Cl.: B60R 21/017, H02J 7/34, H02J 9/06

(54) **A power supply arrangement**
Stromversorgungsanordnung
Agencement d'alimentation électrique

(43) Date of publication of application: 08.01.2014
(73) Proprietor: Autoliv Development AB, 447 83 Vårgårda (SE)
(72) Inventor: Darraba, Roger, 78360 Montesson (FR); Lesbroussart, Franck, 95810 Epiais-Rhus (FR)
(74) Representative: Beattie, Alex Thomas Stewart

(56) References cited:
- EP-A1- 2 431 211
- WO-A1-02/066293
- WO-A1-2008/157389
- WO-A2-2007/003469
- FR-A1- 2 924 536

## Description

The present invention relates to a power supply arrangement and more particularly relates to a power supply arrangement for supplying power to a vehicle safety device.

A vehicle safety device, such as an airbag, typically forms part of an occupant restraint system which is controlled by an electronic control unit. The electronic control unit is usually connected to one or more remote sensors which are operable to sense the vehicle operating conditions. The sensors can, for instance, sense whether an occupant is wearing a seat belt, the presence of an occupant, a crash situation, an anticipated crash situation, or another parameter relating to the safety of an occupant of the vehicle.

During normal vehicle operation the electronic control unit of a restraint system receives power from the vehicle's battery via the vehicle's electrical system. However, in a crash situation, the power supply connection between the vehicle's battery and the electronic control unit may be broken. In this instance, the electronic control unit is not able to function because it is not connected to a source of power.

There is a need for a power supply arrangement to drive an electronic control unit of a restraint system in a vehicle so that the electronic control unit operates correctly during and for several seconds after a crash situation when the electronic control unit is disconnected from the vehicle's battery.

International publication number WO2007/003469 describes a control unit for a vehicle safety device.

The present invention seeks to provide an improved power supply arrangement.

According to one aspect of the present invention, there is provided an electronic control unit as defined in claim 1 hereinafter.

In order that the invention may be more readily understood, and so that further features thereof may be appreciated, embodiments of the invention will now be described, by way of example, with reference to the accompanying drawings in which:
Figure 1 is a schematic diagram of a power supply arrangement of a non-claimed example,
Figure 2a is a graphical representation of the voltage of a primary power source during the operation of an example,
Figure 2b is a graphical representation of the voltage of an auxiliary power source during operation of an example,
Figure 2c is a graphical representation of the voltage output from a power supply arrangement of an example,
Figure 2d is a graphical representation of a voltage output to a pyrotechnic actuator driver during operation of an example,
Figure 3 is a schematic diagram of a power supply arrangement of the embodiment of the invention,
Figure 4a is a graphical representation of the voltage of a primary power source during the operation of the embodiment of the invention,
Figure 4b is a graphical representation of the voltage of an auxiliary power source during operation of the embodiment of the invention,
Figure 4c is a graphical representation of the voltage output from a power supply arrangement of the embodiment of the invention, and
Figure 4d is a graphical representation of a voltage output to a pyrotechnic actuator driver during operation of the embodiment of the invention.

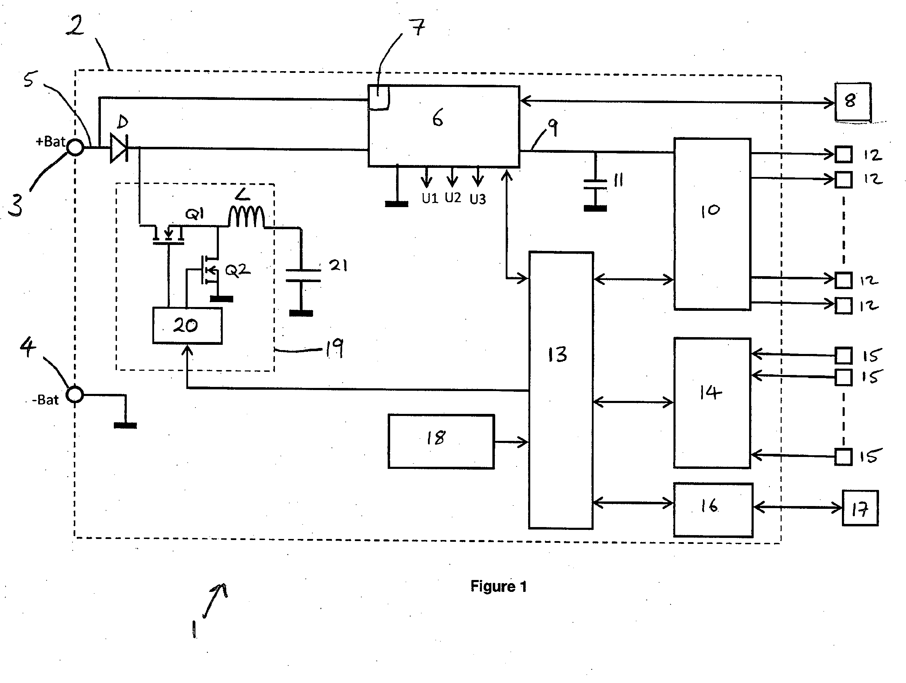

Referring to figure 1 of the accompanying drawings, a power supply arrangement 1 of a non-claimed example preferably forms part of an electronic control unit 2. The electronic control unit 2 forms part of a vehicle occupant restraint system (not shown). The power supply arrangement 1 incorporates a power supply input comprising positive and ground input connections 3, 4 which are configured to be connected to the primary power source of a vehicle, such as a vehicle battery. The primary power source or battery is typically configured to provide a DC voltage at 12V or 24V.

The positive voltage input 3 is connected to a power supply line 5 in the power supply arrangement 1. A diode D is provided in series with the power supply line 5 close to the positive power supply input 3. The power supply line 5 is connected to a voltage control unit 6. The voltage control unit 6 comprises a voltage sensor 7 which is connected to the power supply line 5 at a point on the power supply line 5 between the positive voltage input 3 and the diode D.

The voltage sensor 7 senses the voltage applied to the power supply line 5 by the primary power source.

The voltage control unit 6 comprises a DC-DC converter circuit which converts the voltage input via the power supply line 5 into one or more output voltages U1-U3 such as 3V, 5V or 9V which are used to power components in the power supply arrangement 1 and other components of the vehicle safety system.

The voltage control unit 6 is operable to communicate with one or more miscellaneous sensors 8 provided in a vehicle. The miscellaneous sensors 8 may, for instance, be one or more sensors selected from a group comprising a seat belt buckle sensor, an occupant detection sensor, an occupant position sensor or another sensor which senses the presence or position of an occupant of a vehicle.

The voltage control unit 6 incorporates a firing voltage output 9 which is connected to at least one pyrotechnic actuator driver 10. The firing voltage output 9 is, in one embodiment, configured to provide an output of 35V. A re-chargeable auxiliary power source in the form of a capacitor 11 is connected between the firing voltage output 9 and ground. In one embodiment, the auxiliary power source is one or more electrolytic capacitors.

Each pyrotechnic actuator driver 10 is connected to one more pyrotechnic actuators or squibs 12. The pyrotechnic actuators 12 are positioned remotely in a vehicle from the power supply arrangement 1. The pyrotechnic actuators 12 may form part of one or more vehicle safety devices positioned in a vehicle, such as airbags, hood lifters or other vehicle safety devices comprising a pyrotechnic gas generator.

The voltage control unit 6 is connected to a central control unit 13. The central control unit 13 is operable to transmit and receive control signals to and from the voltage control unit 6. The central control unit 13 is also connected to the or each pyrotechnic actuator driver 10 to provide actuation signals to each pyrotechnic actuator driver 10.

The central control unit 13 is connected to a remote sensor interface 14 which is configured to be connected to one or more remote sensors 15. The remote sensors 15 are sensors which sense the operating state of a vehicle. The sensors 15 may include a crash sensor, an anticipated crash sensor, an acceleration sensor, speed sensor or another sensor capable of sensing the operation of a vehicle.

In one embodiment, the central control unit 13 is connected to a communication interface 16 which is configured to be connected to the communication network or bus 17 in a vehicle. The communication interface 16 allows the power supply arrangement to communicate with the central control arrangement in a vehicle.

In one embodiment, the electronic control unit 2 incorporates internal sensors 18. The internal sensors may comprise an acceleration sensor or a gyroscopic sensor.

The central control unit 13 is connected to provide control signals to a DC-DC converter 19. The control signals are provided to a switch driver 20 which is connected to provide switching signals to two transistor switches Q1, Q2. The DC-DC converter 19 also incorporates an inductor L. The inductor L and the switches Q1, Q2 are connected to form a DC-DC converter circuit which is driven by the switch driver 20. The DC-DC converter 19 is connected to the power supply line 5 and a re-chargeable auxiliary power source in the form of a supercapacitor 21. In one embodiment of the invention, the supercapacitor 21 comprises a plurality of supercapacitor cells that are connected in series.

The supercapacitor 21 is preferably an electric double-layer capacitor (EDLC) which is also known as a supercondenser, pseudocapacitor or ultracapacitor. The supercapacitor 21 has a relatively high energy density as compared with a conventional electrolytic capacitor. In embodiments of the invention, the supercapacitor 21 is preferably rated at approximately 25F. In other embodiments of the invention, the supercapacitor 21 is rated at between 20F and 30F. The supercapacitor voltage is preferably between 2V and 2.75V depending on the supercapacitor technology and the operating temperature.

In a further embodiment, the supercapacitor 21 comprises a plurality of supercapacitor cells connected in series. In one embodiment, the supercapacitor 21 comprises six supercapacitor cells, each rated at 2.75V and 2.4F. In embodiments where the supercapacitor 21 comprises a plurality of supercapacitor cells, shunt regulators are connected across each supercapacitor cell to regulate the voltage across each supercapacitor cell.

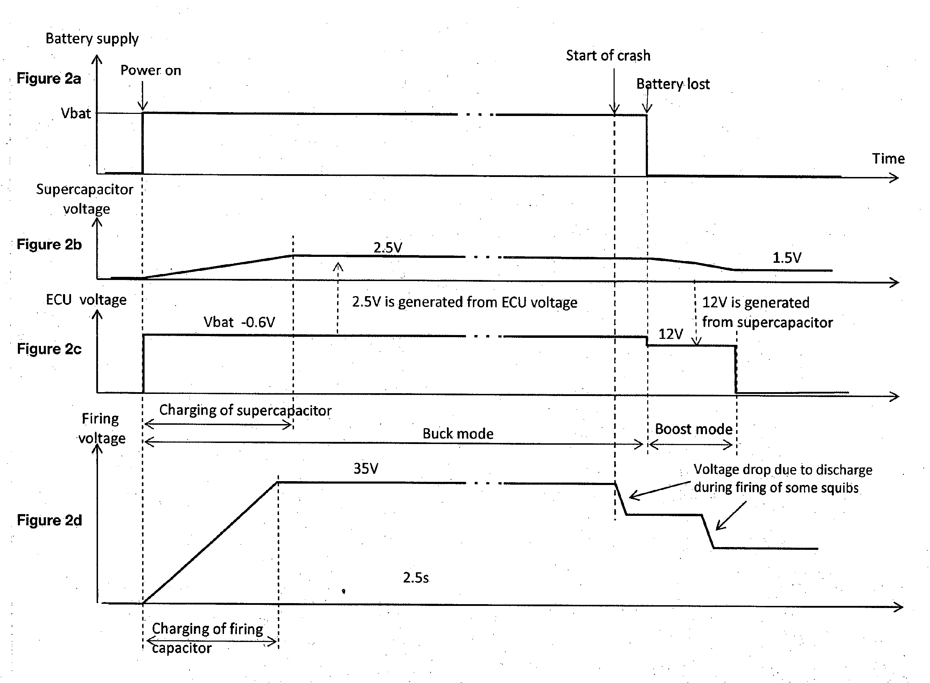

The operation of the power supply arrangement 1 will now be described with reference to figures 2a-2d.

During normal vehicle operation, the primary power source (not shown) is connected to the positive power supply input 3 to apply a voltage to the power supply line 5. The voltage from the primary power source powers the power supply arrangement 1. The voltage sensor 7 senses that the voltage supplied by the power supply source is above a predetermined level. The predetermined level is, in one embodiment, substantially equal to the voltage of the primary power source. The predetermined level may therefore be 12V or 24V.

The voltage control unit 6 supplies voltages at an appropriate level to the components of the safety system in the vehicle, such as the sensors 15. The voltage control unit 6 applies a voltage across the capacitor 11. In one embodiment, the voltage applied to the capacitor 11 is 35V. Energy is stored in the capacitor 11 ready for use by the pyrotechnic actuator drivers 10 in the event that the central control unit 13 actuates one or more of the pyrotechnic actuators 12.

The electronic control unit 2 operates using power from the primary power source during normal vehicle operation when the primary power source is connected to the power supply input 3. The electronic control unit 2 supplies power and control to one or more vehicle safety devices and receives signals from one or more sensors positioned remotely in the vehicle.

When the primary power source supplies a voltage to the power supply line 5, the central control unit 13 controls the switch driver 20 in the DC-DC converter to operate the DC-DC converter 19 in the buck mode to reduce the voltage supplied by the primary power source to the appropriate voltage to keep the supercapacitor 21 charged. The voltage is preferably 2.5V. The switch driver 20 switches the switches Q1 and Q2 to operate the circuit in a buck converter mode by switching switch Q1 and applying complementary switching to Q2 so that Q2 acts as a synchronised freewheeling diode.

In the event that a crash situation occurs, the primary power source or battery may be disconnected from the power supply input 3. The voltage from the primary power source or battery is therefore disconnected from the power supply line 5, as represented in figure 2a.

The voltage sensor 7 senses that the voltage supplied at the power supply input 3 drops below a predetermined level which, in this embodiment is the voltage level of the primary power source. The voltage control unit 6 communicates the sensed voltage level to the central control unit 13. In response to the sensed voltage being below the predetermined level, the central control unit 13 activates the switch driver circuit 20 in the DC-DC converter 19 to operate the DC-DC converter 19 in a boost mode to increase the voltage from the supercapacitor 21 to a higher level.

The DC-DC converter 19 increases the supercapacitor voltage to a voltage which is approximately equal to the voltage of the primary power source and applies the voltage to the supply line 5. The voltage supplied to the power supply line 5 powers the voltage control unit 6 to supply voltages to the components of the vehicle safety system, such as the central control unit 13 and the sensors 15, 18. As shown in figures 2b and 2c the voltage across the supercapacitor 21 is boosted by the DC-DC converter 19 from approximately 2.5 volts to approximately 12 volts.

The capacitor 11 provides a secondary auxiliary power source to power each pyrotechnic actuator driver 10 in the event that the central control unit 13 actuates one or more of the pyrotechnic actuators 12. Energy is dissipated from the further power source 11 as one or more of the pyrotechnic actuators 12 is actuated, causing the voltage across the further power source 11 to drop, as shown in figure 2d.

The switch driver 20 operates the DC-DC converter in the boost mode to increase the voltage from the supercapacitor 21 to the supply line voltage. The supply line voltage is preferably 12V. The switch driver 20 operates the DC-DC converter circuit 19 in the boost mode by switching switch Q2 and applying complementary switching to switch Q1 so that switch Q1 acts as a synchronised rectification diode.

The power supply arrangement 1 allows components in a vehicle safety system to be powered with power from the supercapacitor 21 for a period of time (e.g. 2.5 seconds) after a primary power source is disconnected from the power supply arrangement 1.

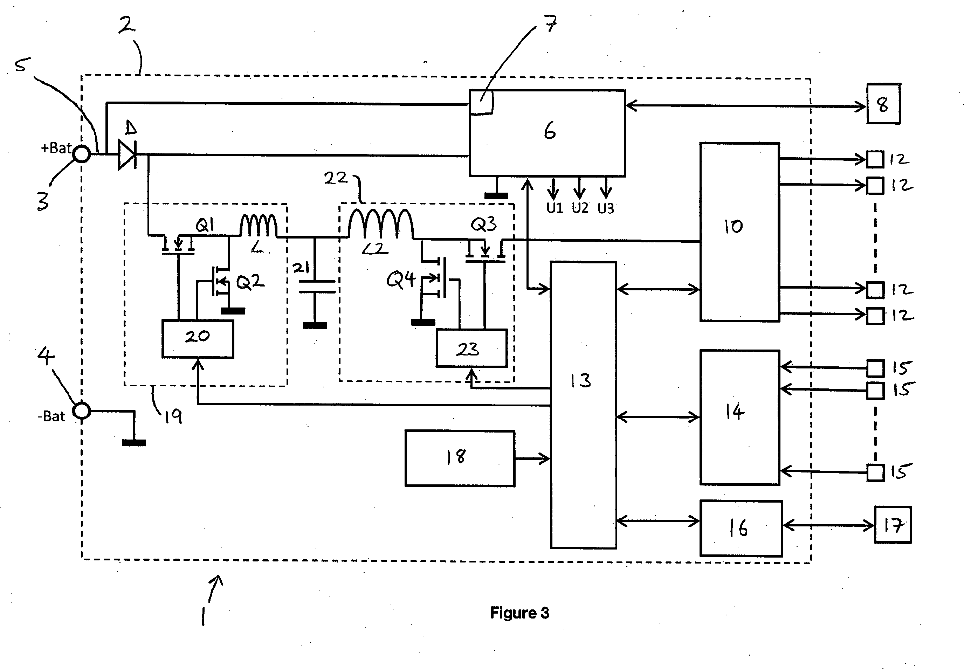

Whilst in the example described above the pyrotechnic actuator drivers 10 receive power from a further auxiliary power source in the form of the capacitor 11, the embodiment incorporates only one auxiliary power source which is the supercapacitor 21. A schematic diagram of this embodiment is shown in figure 3.

Referring now to figure 3, the majority of the components in the power supply arrangement of the embodiment are the same as the components in the embodiment described above and the same reference numerals will be used for corresponding components.

In this embodiment, the power supply arrangement 1 incorporates a second DC-DC converter circuit 22 instead of the capacitor 11. The second DC-DC converter 22 has an input which is connected to the supercapacitor 21. The second DC-DC converter 22 also incorporates an output which is connected to the pyrotechnic actuator drivers 10.

The second DC-DC converter 22 incorporates two switches Q3 and Q4 and a further inductor L2. A further switch driver 23 is connected to provide switching signals to the switches Q3, Q4. The further switch driver 23 is connected to the central control unit 13.

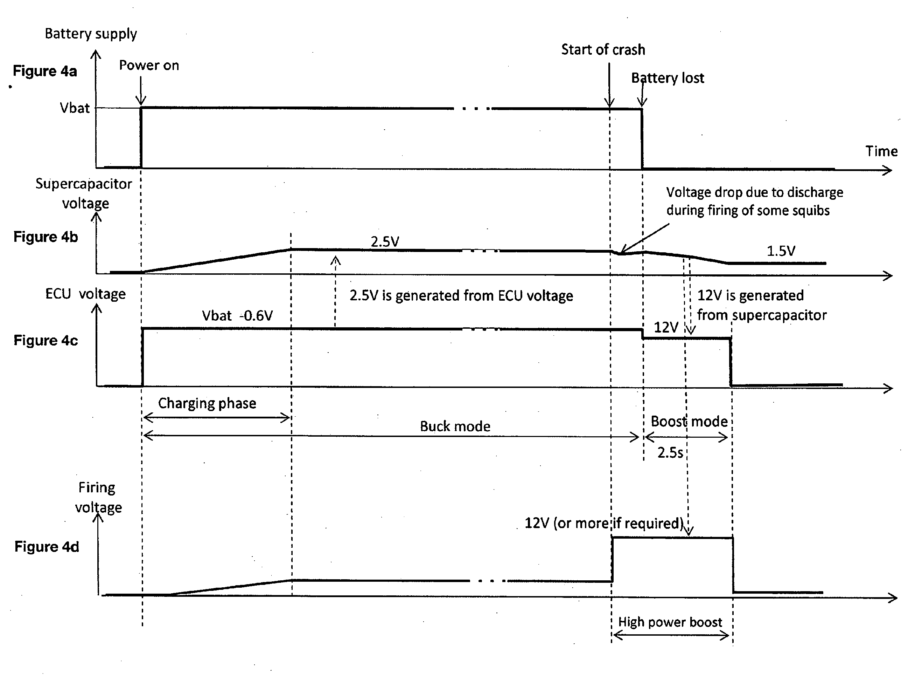

The operation of the power supply arrangement 1 of the embodiment of the invention will now be described with reference to figures 4a-4d.

During normal vehicle operation, power from the primary power source powers the power supply arrangement 1. The DC-DC converter 19 steps the supply voltage down to the supercapacitor voltage to keep the supercapacitor 21 charged.

If the vehicle is involved in a crash situation and the primary power source becomes disconnected from the power supply input 3, the central control unit 13 controls the DC-DC converter 19 to increase the voltage from the supercapacitor 21 to the level of the primary power source and applies the voltage to the power supply line 5. The energy from the supercapacitor 21 powers the components of the vehicle safety system in a similar manner to the embodiment described above.

The second DC-DC converter 22 is controlled by the central control unit 13 to operate in a boost mode to boost the voltage from the supercapacitor 21 to a level suitable for powering the pyrotechnic actuator drivers 10. The voltage level is between 12V and 17V and is preferably 12V. The power output from the second DC-DC converter 22 is sufficient to actuate a plurality of pyrotechnic actuators simultaneously. For example, the power output from the second DC-DC converter 22 is 100W at 12V which provides 8.3A of current that is sufficient to actuate four pyrotechnic actuators simultaneously.

In this embodiment, the supercapacitor 21 powers both the components of the vehicle safety system and the pyrotechnic actuator drivers 10 in the event of a crash situation. This removes the need for the second auxiliary power source capacitor 11.

The use of supercapacitors in embodiments of the invention minimises the size of the power supply arrangement 1 as compared with a conventional power supply arrangement which uses only electrolytic capacitors.

Embodiments of the invention use a DC-DC converter which operates in either a buck mode or a boost mode to maintain a voltage across a supercapacitor at a lower level to the power supply voltage or to boost the voltage of a supercapacitor to the same level as a supply voltage. The mode of the DC-DC converter is selected by the central control unit to either charge the supercapacitor or to use energy stored in the supercapacitor to power components of a vehicle safety system in the event that the primary power source of the vehicle becomes disconnected.

When used in this specification and claims, the terms "comprises" and "comprising" and variations thereof mean that the specified features, steps or integers are included. The terms are not to be interpreted to exclude the presence of other features, steps or components.

## Claims

1. An electronic control unit for a vehicle occupant restraint system, the electronic control unit comprising a power supply arrangement which incorporates:
a power supply line (5) configured to be connected to a primary power source and at least one vehicle safety device;
a re-chargeable auxiliary power source (21);
at least one pyrotechnic actuator driver (10), each pyrotechnic actuator driver (10) being configured to be connected to a respective pyrotechnic actuator (12) in a vehicle safety device;
a control unit (13); and
a DC-DC converter (19) which is connected to the control unit (13), the power supply line (5) and the auxiliary power source (21), **characterised in that**:
the DC-DC converter (19) is operable in a buck converter mode to step down a voltage from the power supply line (5) to a lower voltage to charge the auxiliary power source (21) or in a boost converter mode to step up the voltage provided by the auxiliary power source (21) to output the voltage to the power supply line (5), and that the electronic control unit further comprises:
a voltage sensor (7) connected to the control unit (13), the voltage sensor (7) being operable to sense the voltage applied to the power supply line (5) by the primary power source and to provide a signal indicative of the sensed voltage to the control unit (13), wherein the control unit (13) controls the DC-DC converter (19) to operate in the buck converter mode when the sensed voltage is above a predetermined level and the control unit controls the DC-DC converter (19) to operate in the boost converter mode when the sensed voltage is below the predetermined level; and
a further DC-DC converter (22) which is operable as a voltage boost converter, the further DC-DC converter (22) being connected to the auxiliary power source (21) and each pyrotechnic actuator driver (10) and controlled by the control unit (13) to increase the voltage provided by the auxiliary power source (21) and output the increased voltage to each pyrotechnic actuator driver (10) when the sensed voltage is below the predetermined level.

2. The electronic control unit of claim 1, wherein the auxiliary power source (21) is at least one supercapacitor.

3. The electronic control unit of claim 1 or claim 2, wherein the arrangement further comprises:
a sensor interface (14) connected to the control unit (13), the sensor interface (14) being configured to be connected to one or more remote sensors (15).

4. The electronic control unit of any one of the preceding claims, wherein the arrangement further comprises:
an additional DC-DC converter (6) which is connected to the power supply line (5) and which is operable to output one or more voltages that are higher or lower than the voltage on the power supply line (5).

5. The electronic control unit of any one of the preceding claims, wherein the arrangement further comprises a crash sensor (18) which is connected to the control unit (13).

6. The electronic control unit of claim 5, wherein the crash sensor (18) is an acceleration sensor.

7. The electronic control unit of claim 1, wherein the arrangement further comprises at least one further re-chargeable auxiliary power source (11) which is operable to provide power to each pyrotechnic actuator driver (10).

8. The electronic control unit of claim 7, wherein the at least one further re-chargeable auxiliary power source (11) is an electrolytic capacitor.

9. The electronic control unit of any one of the preceding claims, wherein the power supply arrangement is connected to at least one vehicle safety device.

10. The electronic control unit of claim 9, wherein at least one of the vehicle safety devices comprises a pyrotechnic actuator (12).

11. The electronic control unit of claim 9 or claim 10, wherein the power supply arrangement is connected to at least one remote sensor (15) in a vehicle.

## Patentansprüche

1. Elektronische Steuereinheit für ein Fahrzeuginsassen-Rückhaltesystem, wobei die elektronische Steuereinheit eine Energieversorgungsanordnung umfasst, welche beinhaltet:
eine Energieversorgungsleitung (5), die dafür geeignet ist, mit einer primären Energiequelle und mindestens einer Fahrzeugsicherheitsvorrichtung verbunden zu werden;
eine wiederaufladbare Hilfsenergiequelle (21);
mindestens einen pyrotechnischen Aktuatortreiber (10), wobei jeder pyrotechnische Aktuatortreiber (10) dafür geeignet ist, mit einem jeweiligen pyrotechnischen Aktuator (12) in einer Fahrzeugsicherheitseinrichtung verbunden zu werden;
eine Steuereinheit (13); und
einen DC-DC-Wandler (19), welcher mit der Steuereinheit (13), der Energieversorgungsleitung (5) und der Hilfsenergiequelle (21) verbunden ist, **dadurch gekennzeichnet, dass**:
der DC-DC-Wandler (19) in einem Abwärtswandlermodus, um eine Spannung von der Energieversorgungsleitung (5) auf eine niedrigere Spannung herabzusetzen, um die Hilfsenergiequelle (21) zu laden, oder in einem Aufwärtswandlermodus zu betreiben ist, um die Spannung, die von der Hilfsenergiequelle (21) bereitgestellt wird, hochzusetzen, um die Spannung zu der Energieversorgungsleitung (5) auszugeben, und dass die elektronische Steuereinheit ferner umfasst:
einen Spannungssensor (7), der mit der Steuereinheit (13) verbunden ist, wobei der Spannungssensor (7) so zu betreiben ist, die Spannung zu erfassen, die an der Energieversorgungsleitung (5) durch die primäre Energieguelle angelegt ist, und der Steuereinheit (13) ein Signal bereitzustellen, welches die erfasste Spannung anzeigt, wobei die Steuereinheit (13) den DC-DC-Wandler (19) steuert, in dem Abwärtswandlermodus zu arbeiten, wenn die erfasste Spannung oberhalb eines vorbestimmten Niveaus liegt, und die Steuereinheit den DC-DC-Wandler (19) steuert, in dem Aufwärtswandlermodus zu arbeiten, wenn die erfasste Spannung unterhalb des vorbestimmten Niveaus liegt; und
einen weiteren DC-DC-Wandler (22), welcher als ein Spannungsaufwärtswandler zu betreiben ist, wobei der weitere DC-DC-Wandler (22) mit der Hilfsenergiequelle (21) und jedem pyrotechnischen Aktuatortreiber (10) verbunden ist und von der Steuereinheit (13) gesteuert wird, die Spannung, die von der Hilfsenergiequelle (21) bereitgestellt wird, zu erhöhen und die erhöhte Spannung zu jedem pyrotechnischen Aktuatortreiber (10) auszugeben, wenn die erfasste Spannung unterhalb des vorbestimmten Niveaus liegt.

2. Elektronische Steuereinheit nach Anspruch 1, wobei die Hilfsenergiequelle (21) mindestens ein Superkondensator ist.

3. Elektronische Steuereinheit nach Anspruch 1 oder 2, wobei die Anordnung ferner umfasst:
eine Sensorschnittstelle (14), die mit der Steuereinheit (13) verbunden ist, wobei die Sensorschnittstelle (14) dafür geeignet ist, mit einem oder mehreren Fernsensoren (15) verbunden zu werden.

4. Elektronische Steuereinheit nach einem der vorhergehenden Ansprüche, wobei die Anordnung ferner umfasst:
einen zusätzlichen DC-DC-Wandler (6), welcher mit der Energieversorgungsleitung (5) verbunden ist und welcher so zu betreiben ist, eine oder mehrere Spannungen auszugeben, die höher oder niedriger als die Spannung auf der Energieversorgungsleitung (5) sind.

5. Elektronische Steuereinheit nach einem der vorhergehenden Ansprüche, wobei die Anordnung ferner einen Aufprallsensor (18) umfasst, welcher mit der Steuereinheit (13) verbunden ist.

6. Elektronische Steuereinheit nach Anspruch 5, wobei der Aufprallsensor (18) ein Beschleunigungssensor ist.

7. Elektronische Steuereinheit nach Anspruch 1, wobei die Anordnung ferner mindestens eine weitere wiederaufladbare Hilfsenergiequelle (11) umfasst, welche so zu betreiben ist, jedem pyrotechnischen Aktuatortreiber (10) Energie bereitzustellen.

8. Elektronische Steuereinheit nach Anspruch 7, wobei die mindestens eine weitere wiederaufladbare Hilfsenergiequelle (11) ein Elektrolytkondensator ist.

9. Elektronische Steuereinheit nach einem der vorhergehenden Ansprüche, wobei die Energieversorgungsanordnung mit mindestens einer Fahrzeugsicherheitsvorrichtung verbunden ist.

10. Elektronische Steuereinheit nach Anspruch 9, wobei mindestens eine der Fahrzeugsicherheitsvorrichtungen einen pyrotechnischen Aktuator (12) umfasst.

11. Elektronische Steuereinheit nach Anspruch 9 oder Anspruch 10, wobei die Energieversorgungsanordnung mit mindestens einem Fernsensor (15) in einem Fahrzeug verbunden ist.

## Revendications

1. Unité de commande électronique pour un système de retenue d'occupant d'un véhicule, ladite unité de commande électronique comprenant un arrangement d'alimentation électrique qui intègre :
une ligne d'alimentation électrique (5) configurée pour être raccordée à une source d'alimentation principale et à au moins un dispositif de sécurité du véhicule ;
une source d'alimentation auxiliaire rechargeable (21) ;
au moins un positionneur pyrotechnique (10), chaque positionneur pyrotechnique (10) étant configuré pour être raccordé à un positionneur pyrotechnique (12) respectif dans un dispositif de sécurité d'un véhicule ;
une unité de commande (13) ; et
un convertisseur continu-continu (19) raccordé à l'unité de commande (13), la ligne d'alimentation électrique (5) et la source d'alimentation auxiliaire (21), **caractérisée en ce que** :
le convertisseur continu-continu (19) est utilisable en mode de convertisseur abaisseur pour abaisser une tension provenant de la ligne d'alimentation électrique (5) à une tension plus basse pour charger la source d'alimentation auxiliaire (21) ou en mode convertisseur élévateur pour élever la tension fournie par la source d'alimentation auxiliaire (21) pour transmettre la tension à la ligne d'alimentation électrique (5), et **en ce que** l'unité de commande électronique comprend en outre :
un capteur de tension (7) raccordé à l'unité de commande (13), le capteur de tension (7) étant utilisable pour détecter la tension appliquée à la ligne d'alimentation électrique (5) par la source d'alimentation principale et fournir un signal indicatif de la tension détectée à l'unité de commande (13), l'unité de commande (13) commandant le convertisseur continu-continu (19) afin qu'il fonctionne en mode de convertisseur abaisseur quand la tension détectée dépasse un niveau prédéterminé et l'unité de commande commandant le convertisseur continu-continu (19) afin qu'il fonctionne en mode convertisseur élévateur quand la tension détectée est inférieure au niveau prédéterminé ; et
un autre convertisseur continu-continu (22) utilisable comme convertisseur élévateur de tension, l'autre convertisseur continu-continu (22) étant raccordé à la source d'alimentation auxiliaire (21) et à chaque positionneur pyrotechnique (10) et étant commandé par l'unité de commande (13) pour augmenter la tension fournie par la source d'alimentation auxiliaire (21) et transmettre la tension accrue à chaque positionneur pyrotechnique (10) quand la tension détectée est inférieure au niveau prédéterminé.

2. Unité de commande électronique selon la revendication 1, dans laquelle la source d'alimentation auxiliaire (21) est au moins un supercondensateur.

3. Unité de commande électronique selon la revendication 1 ou la revendication 2, dans laquelle l'agencement comprend également :
une interface de capteur (14) raccordée à l'unité de commande (13), l'interface de capteur (14) étant configurée pour être raccordée à un ou plusieurs capteurs à distance (15).

4. Unité de commande électronique selon l'une quelconque des revendications précédentes, dans laquelle l'agencement comprend en outre :
un convertisseur continu-continu supplémentaire (6) raccordé à la ligne d'alimentation électrique (5) et utilisable pour transmettre une ou plusieurs tensions supérieures ou inférieures à la tension de la ligne d'alimentation électrique (5).

5. Unité de commande électronique selon l'une quelconque des revendications précédentes, dans laquelle l'agencement comprend en outre un détecteur d'impact (18) raccordé à l'unité de commande (13).

6. Unité de commande électronique selon la revendication 5, dans laquelle le détecteur d'impact (18) est un détecteur d'accélération.

7. Unité de commande électronique selon la revendication 1, dans laquelle l'agencement comprend en outre au moins une autre source d'alimentation auxiliaire rechargeable (11) utilisable pour fournir de l'électricité à chaque positionneur pyrotechnique (10).

8. Unité de commande électronique selon la revendication 7, dans laquelle ladite au moins une autre source d'alimentation auxiliaire rechargeable (11) est un condensateur électrolytique.

9. Unité de commande électronique selon l'une quelconque des revendications précédentes, dans laquelle l'agencement d'alimentation électrique est raccordé à au moins un dispositif de sécurité du véhicule.

10. Unité de commande électronique selon la revendication 9, dans laquelle au moins l'un des dispositifs de sécurité du véhicule comprend un positionneur pyrotechnique (12).

11. Unité de commande électronique selon la revendication 9 ou la revendication 10, dans laquelle l'agencement d'alimentation électrique est raccordé à au moins un capteur à distance (15) d'un véhicule.
